# EUROPEAN PATENT APPLICATION

(11) **EP 4 793 755 A1**
(43) Date of publication of application: **19.08.2026**
(21) Application number: 26152532.3
(22) Date of filing: 19.01.2026
(51) Int. Cl.: G06F 7/483, G06F 7/499

(54) **METHOD AND SYSTEM FOR DETERMINING FRACTIONAL PART OF A FLOATING-POINT NUMBER**

(30) Priority: 13.02.2025 GB 202502150
(71) Applicant: Imagination Technologies Limited, Kings Langley, Hertfordshire WD4 8LZ (GB)
(72) Inventor: Ferrere, Thomas, Kings Langley, WD4 8LZ (GB); Zolnai-Lucas, Jeremy, Kings Langley, WD4 8LZ (GB)
(74) Representative: Jacob, Anushya

(57) **Abstract**

There is provided a hardware unit for outputting a value of *frac(x),* where *frac(x)* is defined as x - *floor(x),* wherein the hardware unit is configured to:receive an input floating-point number *x* having a mantissa (*m*) of bit width *'mw',* an exponent (*e*) of bit width *'ew',* a sign bit (*s*) and an exponent bias (bias); calculate power (x_pow) of the input floating-point number *x,* wherein x_pow= e-bias; compare the x_pow to (i) -1 and (ii) *mw*; and output the value of *frac(x)* ), wherein: the hardware unit is configured to output the value of *frac(x),* if the comparison indicates -1 ≤ x_pow *<mw, by* applying a mask to the input floating-point number *x* to generate a masked result, and renormalizing the masked result; and the hardware unit is configured to output the value of *frac(x)* if the comparison indicates input floating-point number *x* is negative and -(*mw+*2) <x_pow<-1, by negating the bits of the input floating-point number *x,* followed by steps of right shifting the negated number and rounding, wherein if the rounded value is 1, the output value of *frac(x)* is a value below 1, otherwise the output value of *frac(x)* is the rounded value.

## Description

### CROSS-REFERENCE TO RELATED APPLICATION

This application claims priority from UK patent application GB2502150.2 filed on 13 February 2025, which is herein incorporated by reference in its entirety.

### TECHNICAL FIELD

The invention relates to determining fractional part of a floating-point number in particular to a dedicated hardware for determining the fractional part.

### BACKGROUND

Most computing systems use number formats, typically in binary notation or base 2, for performing various computations. These number formats include fixed-point or floating-point number formats. A fixed-point number format can be relatively straightforward to work with, but can only represent a limited range of values. Therefore, floating-point number formats are used in most of the modern computing systems to provide a trade-off between range and precision.

A floating-point number comprises a mantissa (m) having a bit length of *'mw'* bits, an exponent (e) having a bit length of *'ew'* bits and optionally a sign bit (s) to represent a binary number. In some widely used formats, such as IEEE-754 standard, the exponent is biased. The bias is typically calculated as 2^{*ew*-1} - 1, where *ew* is the number of bits in the exponent. For example, we have *ew =* 8 and *mw =* 23 for the binary32 floating-point format. The floating-point number can be represented as *x =* (-1)*^{s}* · *2^{e-bias}* . 1.m, The values e-bias and *1.m* are called the power and significand respectively. For a 32-bit floating-point number, the value of the (biased) exponent is limited to a range of -127 to 128. The value of biased exponent (power) 128 is reserved for INF and NaN exceptions. Similarly, the value of biased exponent (power) -127 is used in IEEE-754 standard to represent a denormal value calculated as (-1)*^{s}* · 2^{1*-bias*} · 0.*m*. This includes the value 0 which is obtained by letting *m* = 0. Similarly, when e = 2*^{ew}* - 1, the floating-point number would be ±∞ or is classed as not a number (NaN). Thus, floating-point numbers can be used to represent very small or very large numbers precisely using scientific notation, in binary or in some other base. The use of floating-point numbers in arithmetic computations provides varying degrees of precision depending on the bit length or type of floating-point format used.

The computation of the integral and fractional parts of floating-point numbers is a common operation used in various programming languages This include functions such as *modf* in the C math library and instructions such as *floor* and frac used in shader programming languages. The frac operation also has applications in computer graphics, such as the processing of texture coordinates, and in the computation of some trigonometric functions, Euclidian division, and exponentials. The IEEE-754 standard for floating-point requires four different integer rounding functions, two of which correspond to the usual floor and ceiling instructions. The floor is computed such that $floor \left(x\right) = \left⌊x\right⌋$ . The fraction is computed as either $frac \left(x\right) = x - floor \left(x\right)$ or $frac \left(x\right) = min \left\{x-floor\left(x\right);0x1.fffffep-1f\right\} ,$ where 0*x*1.*fffffep -* 1*f* is the floating-point number before one.1

Computing an integral part of a number can be seen as rounding it to an integer. Thus a problem related to computing the floor is that of converting a floating-point number into a fixed-point number. The values *floor(x)* and *frac(x)* constitute a decomposition of a floating-point number x. The equation for calculating value of *frac(x), frac (x) = x - floor(x) or frac (x) + floor(x) = x,* does not hold exactly owing to possible rounding errors on *frac(x).* A modified equation using a rounding method round towards zero such as *modf*(*x*) + *round*(*x*; *RTZ) = x* for decomposition holds exactly for all values of *x*. However, there are many known techniques or methods of performing rounding for which the equation doesn't hold exactly for all values of x. Some of the methods include Rounding Up, Rounding Down, Rounding Towards Zero, Rounding Away from Zero, Round to Nearest Even Number and the like. It may be required by the API's that a particular rounding mode needs to be used. In such cases there may be error in calculating the floor values or frac values.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is provided a hardware unit for outputting a value of *frac(x),* where *frac(x)* is defined as x *-floor(x),* wherein the hardware unit is configured to:receive an input floating-point number x having a mantissa (*m*) of bit width *'mw',* an exponent (e) of bit width *'ew',* a sign bit (s) and an exponent bias (bias); calculate power (x_pow) of the input floating-point number x, wherein x_pow= *e*-bias; compare the x_pow to (i) -1 and (ii) *mw;* and output the value of *frac(x)* ), wherein: the hardware unit is configured to output the value of *frac(x),* if the comparison indicates -1≤ x_pow *<mw,* by applying a mask to the input floating-point number *x* to generate a masked result, and renormalizing the masked result; and the hardware unit is configured to output the value of *frac(x)* if the comparison indicates input floating-point number *x* is negative and - (*mw+*2) <x_pow<-1, by negating the bits of the input floating-point number *x*, followed by steps of right shifting the negated number and rounding, wherein if the rounded value is 1, the output value of *frac(x)* is a value below 1, otherwise the output value of *frac(x)* is the rounded value.

Optionally, the hardware unit is configured to: determine a first candidate value as the value of *frac(x)* by applying a mask to the input floating-point number *x* to generate a masked result, and renormalizing the masked result; determine a second candidate value as the value of *frac(x)* by negating the bits of the input floating-point number *x*, followed by steps of right shifting the negated number and rounding, and if the rounded value is 1, then the second candidate value of *frac(x)* is set to be a value below 1; select, by the hardware unit, the first candidate value as the value of *frac(x),* if -1≤ x_pow *<mw;* and select, by the hardware unit, the second candidate value as the value of *frac(x),* if the input floating-point number x is negative and *-(mw+2)* <x_pow<-1.

Optionally, if -1≤ x_pow<*mw*, and if the input floating-point number is negative the hardware unit is configured to determine the implicitly signed significand of the input floating-point number x before applying the mask.

Optionally, the hardware unit is further configured to output the value of *frac(x)* as 0, if the x_pow ≥ *mw.*

Optionally, the hardware unit is configured to output the value of *frac(x)* as *'x' ,* if x_pow <-1 and the input floating-point number x is positive.

Optionally, the hardware unit is configured to output the value of *frac(x)* as 1-1 ULP, if x_pow ≤ *-(mw+2)* and the input floating-point number x is negative.

Optionally, the hardware unit is configured to, on identifying that the input floating-point number is a denormal number: output the value of *frac(x)as x,* if the denormal number is a positive number; and output the value of *frac(x)* as 1-1 ULP, if the input denormal number is negative number.

The hardware unit as claimed in claim 1, hardware unit is configured to: determine a first candidate value by applying a mask to the input floating-point number *x* to generate a masked result, and renormalizing the masked result; determine a second candidate value by negating the bits of the input floating-point number *x*, followed by steps of right shifting the negated number and rounding; determine a third candidate value as 0; determine a fourth candidate value as *x*; determine a fifth candidate value as 1-1 ULP; select, by the hardware unit, the first candidate value as the value of *frac(x),* if -1≤ x_pow *<mw;* select, by the hardware unit, the second candidate value as the value of *frac(x),* if the input floating-point number x is negative and *-(mw+2)* <x_pow<-1, wherein if the second candidate value is 1, then the second candidate value is set to be a value below 1; select, by the hardware unit, the third candidate value of as the value of *frac(x),* if the x_pow ≥ *mw;* select, by the hardware unit, the fourth candidate value as the value of *frac(x),* if x_pow<-1 and the input floating-point number x is positive; and select, by the hardware unit, the fifth candidate value as the value of *frac(x),* if x_pow ≤ *-(mw+2)* and the input floating-point number x is negative.

Optionally, the hardware unit is further configured to, on identifying that the input floating-point number is a denormal number: select, by the hardware unit, the fourth candidate value as the value of *frac(x),* if the input floating-point number *x* is a positive denormal number; and select, by the hardware unit, the fifth candidate value of as the value of *frac(x),* if the input floating-point number x is a negative denormal number.

According to a second aspect there is provided a computer-implemented method of outputting a value of *frac(x),* where *frac(x)* is defined as x *-floor(x),* wherein the method comprises: receiving an input floating-point number *x* having a mantissa (*m*) of bit width *'mw',* an exponent (*e*) having a bit width *'ew',* a sign bit (*s*) and an exponent bias (bias); calculating power (x_pow) of the input floating-point number x, wherein x_pow= e-bias; comparing the x_pow to (i) -1 and (ii) *mw;* and outputting a value of *frac(x),* wherein: if -1≤ x_pow *<mw,* the outputting value of *frac(x),* comprises applying a mask to the input floating-point number x to generate a masked result, and renormalizing the masked result and outputting the masked result as the value of *frac(x);* or if the input floating-point value x is a negative and *-(mw+2)* <x_pow <-1, the outputting value of *frac(x)* by negating the bits of the input floating-point number x, followed by steps of right shifting the negated number and rounding, wherein if the rounded value is 1, the output value of *frac(x)* is a value below 1, otherwise the output value of *frac(x)* is the rounded value.

Optionally, the method comprises: determining a first candidate value by applying a mask to the input floating-point number x to generate a masked result, and renormalizing the masked result; determining a second candidate value by negating the bits of the input floating-point number *x*, followed by steps of right shifting the negated number and rounding; selecting the first candidate value as the value of *frac(x),* if -1≤ x_pow *<mw;* and selecting the second candidate value as the value of *frac(x),* if input floating-point number x is negative and *-(mw+2)* < x_pow <-1, wherein if the second candidate value is 1, then the second candidate value of is set to be a value below 1.

Optionally, the method further comprises outputting the value of *frac(x)* as 0, if the x_pow ≥ *mw*.

Optionally, the method further comprises outputting the value of *frac(x)* as 'x', if x_pow <-1 and the input floating-point number *x* is positive.

Optionally, the method further comprises outputting the value of *frac(x)* as 1-1 ULP, if x_pow ≤-(*mw*+2) and the input floating-point number x is negative.

Optionally, the method comprises: outputting the value of *frac(x)* as x, if the input floating-point number *x* is a positive denormal number; and outputting the value of *frac(x)* as 1-1 ULP, if the input floating-point number x is a negative denormal number.

According to a third aspect there is provided a hardware unit for outputting a value of *frac(x),* where *frac(x)* is defined as x *-floor(x),* wherein the hardware unit is configured to: receive an input floating-point number *x* having a mantissa (m) of bit width *'mw',* an exponent (*e*) having a bit width *'ew',* and a sign bit (*s*); output a value of *frac(x),* wherein: the hardware unit is configured to output the value of *frac(x),* if 0.5 <= |*x*| < 2*^{mw}* , by applying a mask to the input floating-point number x to generate a masked result, and renormalizing the masked result; (case 2) and the hardware unit is configured to output the value of *frac(x),* if -0.5 < *x* < -2^{-*mw*-2}, by negating the bits of the input floating-point number *x*, followed by steps of right shifting the negated number and rounding, and if the rounded value is 1, the output value of *frac(x)* is a value below 1, otherwise the output value of *frac(x)* is the rounded value.

Optionally, the hardware unit is configured to: determine a first candidate value by applying a mask to the input floating-point number x to generate a masked result, and renormalizing the masked result; determine a second candidate value by negating the bits of the input floating-point number x, followed by steps of right shifting the negated number and rounding; select, by the hardware unit, the first candidate value as the value of *frac(x),* if 0.5 <= |*x*| < 2*^{mw}* ; and select, by the hardware unit, the second candidate value as the value of *frac(x),* if -0.5 < *x <* -2^{-*mw*-2}, wherein if the second candidate value is 1, then the second candidate value of is set to be a value below 1.

Optionally, the hardware unit is further configured to output the value of *frac(x)* as 0, if |*x*| >= 2*^{mw}*.

Optionally, the hardware unit is further configured to output the value of *frac(x)* as x, if 0 < *x* < 0.5 or if the input floating-point number *x* is a positive denormal number.

Optionally, the hardware unit is further configured to output the value of *frac(x)* as 1-1ULP, if - 2^{-*mw*-2} ≤ *x* ≤ 0 or if the input floating-point number *x* is a negative denormal number.

Optionally, the hardware unit is configured to: determine a first candidate value by applying a mask to the input floating-point number x to generate a masked result, and renormalizing the masked result; determine a second candidate value by negating the bits of the input floating-point number x, followed by steps of right shifting the negated number and rounding; determine a third candidate value as 0; determine a fourth candidate value as *x*; determine a fifth candidate value as 1-1 ULP; select, by the hardware unit, the first candidate value as the value of *frac(x),* if 0.5 <= |*x*| < 2*^{mw}* ; select, by the hardware unit, the second candidate value as the value of *frac(x),* if -0.5 < *x* < -2^{-*mw*-2}, wherein if the second candidate value is 1, then the second candidate value is set to be a value below 1; select, by the hardware unit, the third candidate value as the value of *frac(x),* if |*x*| >= 2*^{mw}*; select, by the hardware unit, the fourth candidate value as the value of *frac(x),* if 0 < *x* < 0.5 or if the input floating-point number *x* is a positive denormal number; and select, by the hardware unit, the fifth candidate value as the value of *frac(x),* if - 2^{-*mw*-2} ≤ *x* ≤ 0 or if the input floating-point number x is a negative denormal number.

According to a fourth aspect there is provided a computer-implemented method of outputting a value of *frac(x),* where *frac(x)* is defined as x *-floor(x).* The method comprises: receiving an input floating-point number x having a mantissa (m) of bit width *'mw',* an exponent (e) having a bit width *'ew'* and a sign bit (*s*); outputting a value of *frac(x),* wherein: if 0.5 <= |*x*| < 2*^{mw}* , output the value of *frac(x)* by applying a mask to the input floating-point number x to generate a masked result, and renormalizing the masked result; (case 2) and if -0.5 < *x <* -2^{-*mw*-2} output the value of *frac(x)* by negating the bits of the input floating-point number x, followed by steps of right shifting the negated number and rounding, wherein if the rounded value is 1, the output value of *frac(x)* is a value below 1, otherwise the output value of *frac(x)* is the rounded value.

Optionally, the method comprises: determining a first candidate value by applying a mask to the input floating-point number *x* to generate a masked result, and renormalizing the masked result; determining a second candidate value by negating the bits of the input floating-point number x, followed by steps of right shifting the negated number and rounding; selecting the first candidate value as the value of *frac(x),* if 0.5 <= |*x*| < 2*^{mw}*; and selecting the second candidate value as the value of *frac(x),* if -0.5 *< x* < -2^{-*mw*-2} , wherein if the second candidate value is 1, then the second candidate value of is set to be a value below 1.

Optionally, the method further comprises outputting the value of frac(x) as 0, if |*x*| >= 2^{mw} .

Optionally, the method further comprises outputting the value of frac(x) as 'x', if 0 < x < 0.5.

Optionally, the method further comprises outputting the value of frac(x) as 1-1 ULP, if - 2^{-mw-2} ≤ x ≤ 0.

Optionally, the method comprises: outputting the value of frac(x) as x, if the input floating-point number x is a positive denormal number; and outputting the value of frac(x) as 1-1 ULP, if the input floating-point number x is a negative denormal number.

According to a fifth aspect there is provided a computer readable code configured to cause the method of any of claims 10-15 or 22-23 to be performed when the code is run.

According to a sixth aspect there is provided a computer readable storage medium having encoded thereon the computer readable code of claim 24.

The hardware unit for outputting a value of *frac(x),* may be embodied in hardware on an integrated circuit. There may be provided a method of manufacturing, at an integrated circuit manufacturing system, a hardware unit for outputting a value of *frac(x).* There may be provided an integrated circuit definition dataset that, when processed in an integrated circuit manufacturing system, configures the system to manufacture a hardware unit for outputting a value of *frac(x).* There may be provided a non-transitory computer readable storage medium having stored thereon a computer readable description of a hardware unit for outputting a value of *frac(x),* that, when processed in an integrated circuit manufacturing system, causes the integrated circuit manufacturing system to manufacture an integrated circuit embodying a hardware unit for outputting a value of *frac(x),*

There may be provided an integrated circuit manufacturing system comprising: a non-transitory computer readable storage medium having stored thereon a computer readable description of the hardware unit for outputting a value of *frac(x);* a layout processing system configured to process the computer readable description so as to generate a circuit layout description of an integrated circuit embodying the hardware unit for calculating the outputting a value of *frac(x);* and an integrated circuit generation system configured to manufacture the hardware unit for outputting a value of *frac(x),* according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a hardware 100 for calculating the fractional part of a number;
FIG. 2 illustrates calculation of the fractional part of a number using a floor mask;
FIG.3A illustrates calculation of the fractional part of a fixed-point number using a frac mask;
FIG.3B illustrates calculation of the fractional part of a floating-point number using a frac mask;
FIG.4A and FIG.4B are block diagrams of a hardware unit for calculating the fractional part of a number;
FIG. 5A and FIG. 5B are flow diagrams of a method of calculating the fractional part of a number;
Figure 6 shows a computer system in which a graphics processing system is implemented; and
Figure 7 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As discussed earlier, there are many applications or APIs that requires the computation of integral and fractional parts of a floating-point number. For example, the applications in computer graphics such as generating texture values where typically the texture coordinates have fractional part encoding the position of a texture value in a tile and integral part representing the number of repetitions of the of the tile. Thus, some of these applications compute both the integral and fractional parts of the texture coordinate quite often. For example, in order to create an image made of random noise, the operation *float noise (float x),* below, can be used which includes operations such as *floor(x)* and *frac(x).*

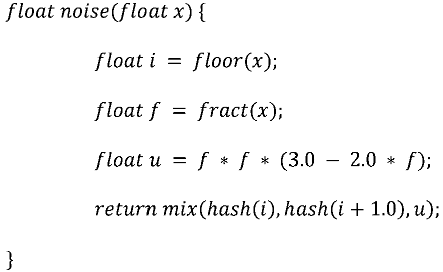

Another application of computing fractional and integral parts can be found in the computation of angles in turns, such that 1 turn is 2*π* radians. Trigonometric functions such as sinPi and cosPi recommended by the IEEE-754 standard accept their argument in 1/2 turns. For such functions, the fundamental range reduction step simply amounts to taking the fractional part. The decomposition of floating-point numbers into integral and fractional parts also appears in the computation of exponentials. The floor constitutes the exponent part of the result and the fraction yields the mantissa after nonlinear transformation. Hence these instructions could be used to achieve a cheap, approximate computation of the base-2 exponential. The floor operation can also be used in the computation of Euclidean division over numbers in floating-point format and may provide an alternative to integer division in architectures that don't offer it. Typically, the fractional part of a number is calculated using the equation: $frac \left(x\right) = x - floor \left(x\right)$

To better understand the calculation of fractional part, consider fixed-point number y, y=2.56 expressed in base 10. Now the fractional part of number y is $frac \left(x\right) = x - floor \left(x\right)$ $\begin{matrix}frac \left(2.56\right) = 2.56 - floor \left(2.56\right) \\ = 2.56 - 2 = 0.56\end{matrix}$

However, the result of the calculation of the fractional part for a negative number is not so intuitive. Now consider y= -2.56 $\begin{matrix}frac \left(-2.56\right) = - 2.56 - floor \left(-2.56\right) \\ = - 2.56 - \left(-3\right) = 0.44\end{matrix}$

As explained earlier, a floating-point number x comprises a mantissa (m) having a bit length of *'mw'* its, an exponent (e) having a bit length of *'ew'* bits and optionally a sign bit (s) can be represented as: $x = {\left(-1\right)}^{s} ⋅ {2}^{e - bias} ⋅ 1 . m$ where bias= 2^{ew-1} - 1, where ew is the number of bits of the exponent e.

The calculation of the fractional part of a floating-point number returns the non-integral portion of the floating-point number. The value of *frac(x)* is a real-value, or the suitable exception. The value of the fractional part is: $frac \left(x\right) = \left\{\begin{matrix}NaN & if x ∈ \left\{\pm ∞,NaN\right\} \\ round \left(x-\left⌊x\right⌋\right) & otherwise\end{matrix}\right.$ where $\left⌊x\right⌋$ denotes the mathematical *floor(x),* defined as the largest integer smaller or equal to *x*, and *round* denotes floating-point rounding according to a standard scheme, such as round to nearest with even tie-breaking scheme, or round towards 0.

The equation (3) is the same as equation (1) with exceptional value handling under the IEEE 754 standard for addition, and the need for rounding due to the exact answer not always being representable made explicit.

For example, if the value of *x* = ±∞, then $\begin{matrix}floor \left(\pm ∞\right) = \pm ∞ , \\ frac \left(\pm ∞\right) = \pm ∞ - floor \left(\pm ∞\right) = \pm ∞ - \pm ∞ = \pm ∞\end{matrix}$ Similarly, *floor (NaN) = NaN* $frac \left(NaN\right) = NaN - floor \left(NaN\right) = NaN - NaN = NaN$ Similarly, when x= ±0 $floor \left(\pm 0\right) = \pm 0$ $Frac \left(\pm 0\right) = \pm 0 - \pm 0$

For negative numbers, as mentioned above, the fractional part may go against the common intuition. For a small positive ε, we have $frac \left(-ε\right) = round \left(-ε-\left⌊-ε\right⌋\right) = \left(1-ε\right)$ which when rounded to nearest or towards positive infinity can produce the integral value 1. Some applications alter the behaviour near -0 to instead return 1 - 2^{-*mw*-1}, i.e. the floating-point number before 1.

The computation of the fractional part can be performed by existing hardware (or processor) on a computing system, for example a GPU or a CPU. The processor may be able to sequentially operate on a number, and perform the two building block operations of *floor(x)* and then a subtraction of that result from x sequentially. Typically, it would take 2 or 3 processor instructions to chain these operations and generate an output for the fraction part computation. In other words, since it is possible to execute only a certain number of instructions per second, the operations for computing the fractional part could be performed only at ½ or ⅓ the rate of other instructions like addition or subtraction. Performing the computation in such a way would not require any additional hardware elements and hence it would be area efficient as the processor in GPU's and CPU's are likely to have hardware elements already for performing the floor operation and for doing subtraction.

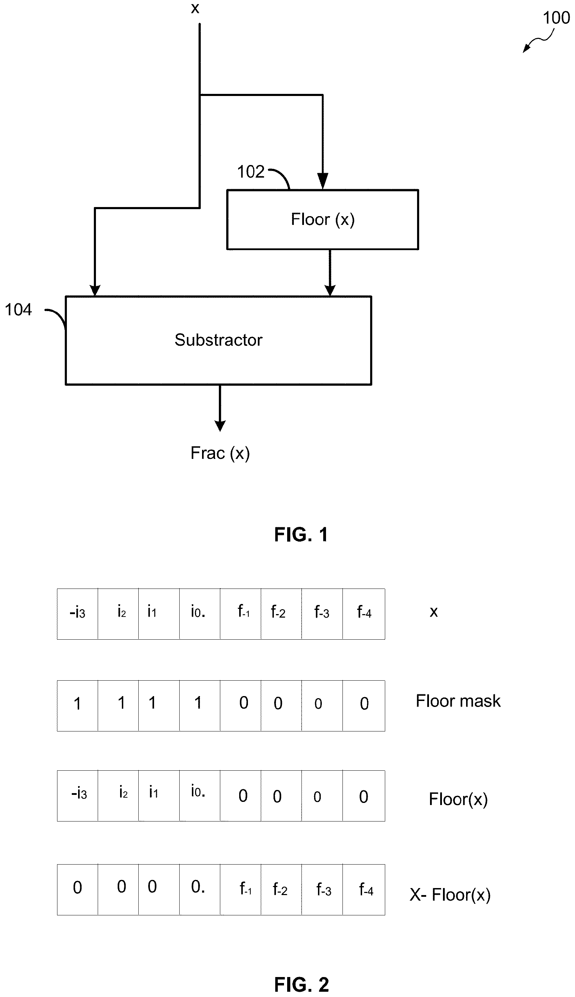

The computation of the fractional part can also be performed by incorporating into existing hardware a separate hardware block for performing the combined floor operation and subtraction as shown in FIG.1. The advantage of incorporating a separate hardware block such as hardware 100 is that the computation of fractional part can be performed as a single processor instruction, which internally chains a floor calculation unit into a subtraction unit (and potentially into a min unit). This solves the timing disadvantage of using the existing hardware with a trade-off which is increased area. In contrast to using generically purposed existing floor calculation unit or subtraction units, which are built to run at a timing constraint that allows the whole instruction length of time to perform each individual floor or subtraction calculation, the dedicated hardware block would do both operations in the same amount of time. Hence the extra hardware block is area intensive.

FIG.1 illustrates a hardware 100 for calculating the fractional part of a number. The hardware comprises a subtractor 102 and a floor calculation unit.104. In accordance with equation (2) above, an input floating-point number (x) may comprise a mantissa (m) having a bit length of *'mw'* bits, an exponent (e) having a bit length of *'ew'* bits and optionally a sign bit *(s).*

The input floating-point number x is provided as an input to the subtractor 102 and the floor calculation unit 104. The floor calculation unit 104 calculates floor value of the floating-point number x which is defined as the largest integer that does not exceed x. The steps of calculating the value of *floor(x)* include converting the significand into two's complement value, from sign-magnitude encoding. The floor value is constructed by aligning the significand by shifting to match a power of 0. Further all the bits after radix point of the two's complement value is masked off to obtain the value of floor. This process is explained in more detail below.

The floor value is provided to the subtractor 102. The subtractor 102 subtracts the floor value *(floor(x))* from the input floating-point number (x) to output a value of *frac(x).*

FIG.2 illustrates the calculation of fractional part of a number using the hardware 100. Once input floating-point number (x) is received. The input floating-point number (x) is aligned so that power = 0 (where power is defined, as above, as *e-bias)* by shifting the bits to the left (shifting the radix point to the right) based on the exponent. In FIG. 2, the bits before the radix point (i₃, i₂, i₁, i₀) indicate the integral part of the number and the bits after the radix point (f₋₁, f₋₂, f₋₃, f₋₄) indicate the fractional part of the number. A floor mask is generated based on the floating-point number x. The floor mask could be a string of 1s and 0s. The floor mask may comprise a string of 1s for bits corresponding to the bits of the floating-point number x before the radix point and a string of 0s for bits corresponding to the bits of the floating-point number x after the radix point. The floor value is obtained by applying the floor mask to the bits of the floating-point number x. Once the floor value *(floor(x))* is obtained, then the fractional part (value of *frac(x))* is obtained by subtracting the floor value from x. However, for negative numbers to determine the floor value an addition step of converting the significand into two's complement value is required before aligning the significand.

Thus, when two terms (or numbers) are to be subtracted, the terms are aligned with each other i.e. the exponents of the two terms are made the same. If exponents of two numbers or terms are the same, the terms are already aligned - this is always the case when the value of x >1 and also for values of x < 0 except when rounding to the next integral power-of-two. Therefore, in such cases, the alignment of the significands before subtraction can be omitted. The inventors found that instead of performing a subtraction of floor value from the floating-point number x, it is possible to invert the *"floor mask"* to turn it into a *"frac mask"* Suppose *x_sgnf* denotes the significand of x and x_*pow* its power. Let *x'_sgnf* be the signed significand of x defined as $\begin{matrix}x ′ _ sgnf = \overline{x _ sgnf} + 1 \\ x ′ _ sgnf = x _ sgnf = , otherwise\end{matrix}$ when x<0, and $\begin{matrix}\begin{matrix}Frac \left(x\right) & = {2}^{x _ pow} ⋅ \left(x′_sgnf-\left(x′_sgnf&floor mask\right)\right) & \left(5\right) \\ & = {2}^{x _ pow} ⋅ \left(x′_sgnf&\overline{floor mask}\right) & \left(6\right)\end{matrix} \\ \end{matrix}$

The inventors identified that instead of applying a *floor mask,* the fractional part of the floating-point number (value of *frac(x))* can be calculated by applying a *frac mask.* The masked result might be further rounded and renormalized to obtain value of *frac(x).* In some cases such as when x>0 or x<-0.5, no rounding is required when applying *frac mask* as the result represents the entire fractional part of the number x.

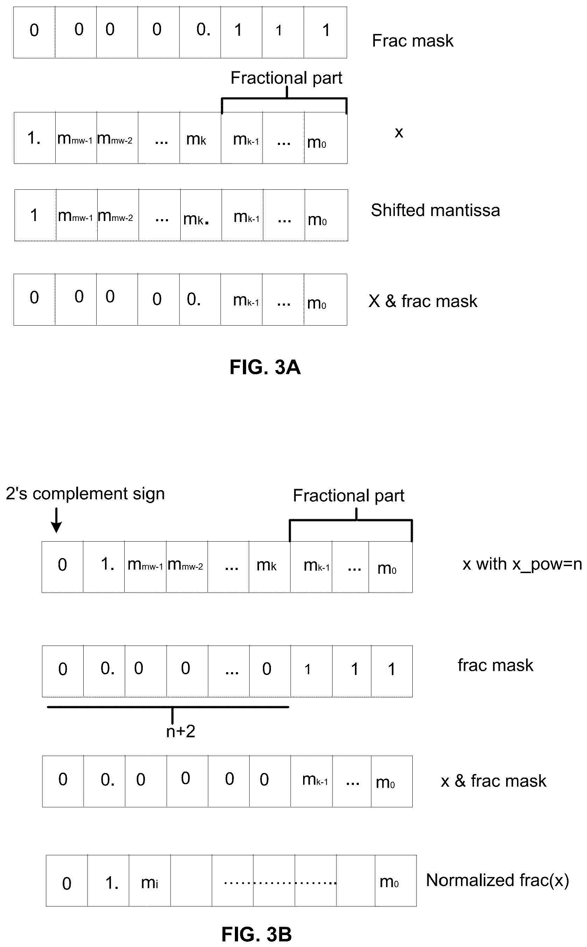

The frac mask can be of two different types. Either a constant mask can be used, or a dynamic mask can be used to calculate the value of *frac(x).* The calculation of value of *frac(x)* using a constant mask is shown in FIG. 3A. A constant mask is created based on a pre-defined/ expected position of the fractional part of the mantissa. For example, the mask may comprise a string of 0's and 1's such that all the bits before a defined radix position are 0 bits and the bits after the radix position are 1 bits. Using this type of mask, the fractional mantissa bits of the input value x are then aligned to the position expected by the mask. When using the constant mask to calculate the value of *frac(x),* the mantissa m (or significand 1.m) of the input number x can be shifted until it aligns itself with the decimal point based on the exponent e, and then the constant mask may be applied to the shifted mantissa bits. Consider the mantissa m has k least significand bits (LSBs) that contribute to the fractional part. Therefore, the mantissa is shifted based on the exponent (e) such that all the bits that contribute to the integral part (i.e. MSBs after kth bit) are aligned before the decimal point (radix point) and all the k fractional bits (mₖ₋₁- m₀) are aligned after the decimal point. Thus, on applying the mask all the bits contributing to the integral part is masked out and the mantissa (bits that contribute to the fractional part) of the value of frac (x) is obtained. Applying a constant mask to obtain the value of *frac(x)* can be expensive as the mantissa potentially needs to be shifted across the entire floating-point range, and thus the hardware needs to be able to handle that extreme situation. Even if the shifting is bounded to remove degenerate cases when x has no fractional part or is entirely fractional, there's still a need to shift the mantissa by a minimum of *2*(mw-1)* in the worst case.

The inventors identified that if certain scenarios where there is a no need to shift significands to right (i.e. when power is less than 0), then it can be beneficial that the value of *frac(x)* can be obtained by shifting the mantissa to the left by only a maximum of mw+2 places. In such cases, the significand 1.m of the input floating-point number (x) is converted to two's complement form. The bit width of the two's complement significand would be *mw+2.* In order to obtain the value of *frac(x),* the mantissa is shifted to the left based on the value of exponent (e) and the constant mask can be applied to the shifted mantissa.

The inventors also identified that it can be beneficial to apply a dynamic mask to determine the value of *frac(x)* instead of a constant mask. The calculation of the value of *frac(x)* using a dynamic mask is depicted in FIG. 3B. As explained above, the significand 1.m of the input floating-point number (x) is converted to two's complement form. The bit width of the two's complement significand would be *mw+2.* Consider that the k LSB bits of the two's complement significand represents the fractional part of the input floating-point number (x). When using the dynamic mask to obtain the value of *frac(x),* the mask is applied so as to mask out the bits of the mantissa m that contributes to the integer part. This can be done by shifting the mask to the right to align 1s with the fractional part. Thus, the dynamic mask has a bit length of *mw+2* which is the length of significand +sign bit. Therefore, there is only a need for shifting the mask by at the maximum of *mw+2* bits. The shifted dynamic mask is applied to the significand so that it masks out the integer bits to generate the bits that contribute to the fractional part. Shifting the mask (as explained when using a dynamic mask) is more efficient than shifting the significand of the (converted) input number (as explained when using the constant mask) as the shifting of the mask can be performed in parallel to converting the input number into two's complement form. Hence the delay in calculating the value of *frac(x)* is reduced. Even though the same effect of shifting the mask to right can be obtained by shifting the significand to the left, that would require first converting the input number two's complement form and then performing the shifting of the significand which increases the delay in calculating the value of *frac(x).* Due to the floating-point representation, the value obtained by applying the dynamic mask will typically have leading zeros corresponding to the position of integer bits in the significand. Hence the result obtained by applying the dynamic mask is normalized by shifting bits to get a leading 1 at the MSB of mantissa and the exponent is compensated.

Now obtaining the fractional part of the negative number in two's complement representation works in a similar way as explained in FIG. 3B. The MSB represents the sign bit of the floating-point number x. The sign bit itself has a weight, and that weight is contributed to the integral part. So, masking out the integer (including the MSB) still provides the value of *frac(x)* as it masks out all integral contribution leaving the fractional contribution.

However, there are scenarios, such as when the negative numbers are very small negative numbers, when the value of *frac(x)* would end up mapping to numbers that are closer to 1. For example, for x = -0.1, the value of *frac(x)* would be 0.9 which is close to 1. The negative numbers closer to zero will have fractional part close to 1. Therefore, a decision needs to be taken on how to round these numbers using variable rounding modes to output a value of *frac(x),* as it is not possible to exactly represent the true fractional parts of negative numbers close to 0. Also depending on the rounding mode, numbers having fractional parts close to 1 would be rounded to 1. This is considered an incorrect output when returning the value of *frac(x)* to some APIs. It is required by many APIs that the output is strictly less than 1. But in cases explained above i.e. for smaller negative number closer to 0 some rounding modes return 1 as an output.

The inventors devised a dedicated hardware implementation (unit) for determining the value of fractional part of a floating-point number (value of *frac(x))* while reducing the latency. The hardware implementation is considerably more efficient in terms of latency and circuit area compared to the straightforward implementation of incorporating a hardware block comprising a floor calculation unit and a subtractor for determining a flooring value followed by a subtraction. The proposed dedicated hardware unit is akin to a split-path floating-point adder, which splits the operation on the input floating-point number thereby simplifying the mantissa alignment and normalisation. In the context of a floating-point pipeline, the addition of a dedicated hardware unit for determining the fractional part provides increased throughput and enhanced operation forwarding. Also, the dedicated hardware unit obtains a significant reduction in power consumption associated to the operation of determining fractional part. The area cost of manufacturing a processor or system on a chip that requires the capability of calculating *frac(x)* is also significantly reduced by using this hardware implementation.

The inventors identified various situations and hence different boundary values of *x* for which the value of *frac(x)* can be calculated in different ways, using split paths to shorten the delay. Single operation execution allows for increased throughput, and shorter path delays enables more advanced forwarding in the processor. A first situation as explained in detail above is when the exponent of *floor(x)* and *x* are same. In such cases, a *frac mask* can be used to calculate the value of *frac(x)* as explained above. This forms a main path of the dedicated hardware implementation as explained in detail below.

There are three other situations under which the exponent of *floor(x)* can differ from that of x. A first of the three situations when the exponent of *floor(x)* differs from that of x is when *floor(x)* is zero, i.e. 0 < x < 1. When *floor(x)=* 0, the significand of *floor(x)* is also zero. Therefore, all the bits of the input floating-point number x represent fractional bits and therefore we can set the "frac mask" to all ones to determine the value of *frac(x).*

A second of the three situations when the exponent of *floor(x)* differs from that of *x* is when x ≤ -0.5 and *floor(x)* has a larger magnitude than x, and therefore may have a larger exponent, by at most 1. When the exponent of *floor(x)* is different from that of x by exactly 1, this means the significand of the *floor(x)* is 2.0 before normalisation. For example, consider $x = - 1.5 = - {2}^{\left(0\right) ∗} 1.1 b$ $floor \left(x\right) = - 2 = - {2}^{\left(1\right) ∗} 1.0 b$

It's clear that the exponent of floor(x) differs from that of x by 1. However, it is not required to maintain the significand to be IEEE compliant at all times during calculation (i.e. the leading 1 doesn't always have to be in the unit column). Therefore, instead of representing floor(x) as provided above, floor(x) can be represented as given below thus making the exponent of floor(x) the same as that of x but having a significand of 2.0 (in decimal). Therefore, $floor \left(x\right) = - 2 = - {2}^{\left(0\right) ∗} 10.0 b$

Further the value of frac(x) can be calculated by subtracting floor(x) from x. Since the exponents are matching and the significands are correctly aligned, it is possible to do a direct subtraction (bearing in mind that mantissa and significand are unsigned numbers and that performing a floor operation on a negative number is same as performing a ceiling operation on a positive number and then negating the result) i.e. $\begin{matrix}1 . m - \left⌈1.m\right⌉ & = 1.1 b - 10.0 b = 01.1 b - 10.0 b \\ & = - 00.1 b \\ & = \left(…111111\right) 11.1 b in two ′ s complement\end{matrix}$

However, any bits before the units column will get masked off, even if the mask is all 1s. Also, despite in this scenario x being negative, *frac(x)* is still positive. If *frac(x)* is represented in two's complement we can just ignore any bits above the normal significand range to do: 01.1b - 0.0b = 1.1b in two's complement, which is thus functionally the same.

As long as x ≤ -0.5, *"frac mask"* will always mask off bits with weight greater than 1, so the difference in exponents doesn't affect the calculation if *floor(x)* isn't normalised. Therefore, this situation can be handled in the same execution path as for when *floor(x)= 0.*

A third of the three situations when the exponent of *floor(x)* differs from that of x is when - 0.5 < x < 0 and *floor(x)* is -1, so the exponent of x differs from that of *floor(x)* by two or more. Therefore, a separate path needs to be introduced to handle situations when -0.5 < x < 0. For this, consider equation (4) provided above for small values, with the range of inputs and outputs bound as: $frac \left(x\right) = x - floor \left(x\right) = x - \left(-1\right) = x + 1$
therefore when -0.5 < x < 0 $x = frac \left(x\right) - 1$
when substituting this into the bounds of x: $- 0.5 < x < 0$ $- 0.5 < frac \left(x\right) - 1 < 0$
and then adding 1 to all terms in the inequality: $0.5 \leq frac \left(x\right) \leq 1$
Note the change in inclusivity of the bounds due to rounding. In this path, the power of frac(x) is almost always -1. The power becomes 0 if the result (i.e. the value of frac(x)) rounds up to an exact 1. In this case all the bits of x contribute to the fractional part. Hence after converting x to two's complement, the significand needs to be shifted right to compensate the exponent difference $\begin{matrix}frac \left(x\right) & = round \left(1+x\right) \\ & = round \left(1+\left(-1⋅{2}^{x _ pow}⋅x_sgnf\right)\right) \\ & = round \left(\left(2-x_sgnf\right)≫\left(-1-x_pow\right)\right) \\ & = round \left(\left(\overline{x _ sgnf}+1\right)≫\left(\overline{x _ pow}\right)\right)\end{matrix}$ where >> is an arithmetic right shift.

No normalisation is needed as there will always be leading ones. This situation forms another main path of the dedicated hardware implementation as explained in detail below.

Considering all of the above situations identified, the paths for calculating the value of *frac(x)* in the hardware implementation can be split into following 5 cases based on the boundaries of input.
1. $\left|x\right| > = {2}^{mw}$
2. $0.5 < = \left|x\right| < {2}^{mw}$
3. $0 < x < 0.5$
4. $- 0.5 < x < - {2}^{- mw - 2}$
5. $- {2}^{- mw - 2} \leq x \leq 0$

For case 1, the bits of the mantissa m (or significand 1.m) of input floating-point number x contribute to integral part of the floating-point number x. In other words, none of the mantissa or significand bits represents fractional part. Therefore, the input floating-point number x is an integer number and the value of *frac(x)* is zero.

For case 2, the input floating-point number x either represents positive number ≥ 0.5 or negative numbers ≤ 0.5. Some bits of the mantissa m (or significand 1.m) of input floating-point number x contributes to the fractional part. For case 2, the exponent of *floor(x)* and x are the same or differ by 1 as in the normal subtraction method (*frac*(*x*) = *x - floor* (*x*)). Therefore, as discussed earlier the value of *frac(x)* can be determined by the steps of applying a frac mask and normalizing the output as described above. The method also includes the step of representing the number in two's complement form if the input floating-point number x is a negative number prior to applying the mask and renormalizing the output number. The sign bit of the input floating-point number x indicates if the number is negative or positive.

In case 3, as the input floating-point number x is a fractional positive number, all the bits of the mantissa m (or significand 1.m) represent the fractional part and the sign bit represents the number is positive. Therefore, the value of *frac(x)* is x, which is the input floating-point number. This case represents the first of the three situations described above where the exponent of *floor(x)* and x are not same.

Case 4 represents the third of the three situations described above where the exponent of *floor(x)* and x are not same. In case 4, the input floating-point number x represents numbers close to zero and less than -0.5. Since the input floating-point number x is less than -0.5 the power (exponentbias) has to be -1. Because the number between -0.5 and 0, the value of *frac(x)* is going to be between 0.5 and 1. Since all the bits refer to the fractional part and the input floating-point number x is negative, the value of frac (x) can be obtained by determining the two complement and shifting the significand to the right to compensate the exponent difference. The shifted number is further rounded to obtain the value of *frac(x).* However, in this case rounding methods such as Rounding Up, Round Away from Zero etc provide the value of *frac(x)* as 1. Therefore, an additional step of comparison is optionally performed to compare whether the rounded output is equal to 1 and in that case a value just below 1 is output as the value of *frac(x).* There is also no need to normalize the output as the significand cannot overflow in this case as all the bits represent the fractional part. The boundaries for case 4 can also be provided as -0.5 < *x* < -2^{-*mw*-1} i.e. the minimum exponent could be -mw-1 if the result is always rounded towards zero, as below that value none of the bits of a significand would fall into the significand bit range of the result. The exponent -mw-2 is the position of the "0.5" bit relative to the unit in the last place. Hence the minimum exponent for the boundary is required to be -mw-2, as the bits representing 0.5 ULPs may influence rounding i.e. if the result is rounded to nearest, because if this bit is '0' then the output is closer to the value rounded down, otherwise the output may be closer to the value rounded up.

Case 5 also represents the third of the three situations described above where the exponent of *floor(x)* and x are not same. In case 5, the input floating-point number x represents numbers very close to zero. Since the input floating-point number x so close to 0, the value of *frac(x)* is very close to 1 than the decision boundary under RNE. Therefore, depending on what the round mode is, it is possible that the value of frac (x) is returned as 1. As returning a value of 1 as the value of frac (x) is an invalid output, the method optionally rounds down to that next smallest number that what the rounding mode would have output. Hence a value 1-1ULP (Unit of Least Precision) is provided as the value of frac (x) under all rounding modes.

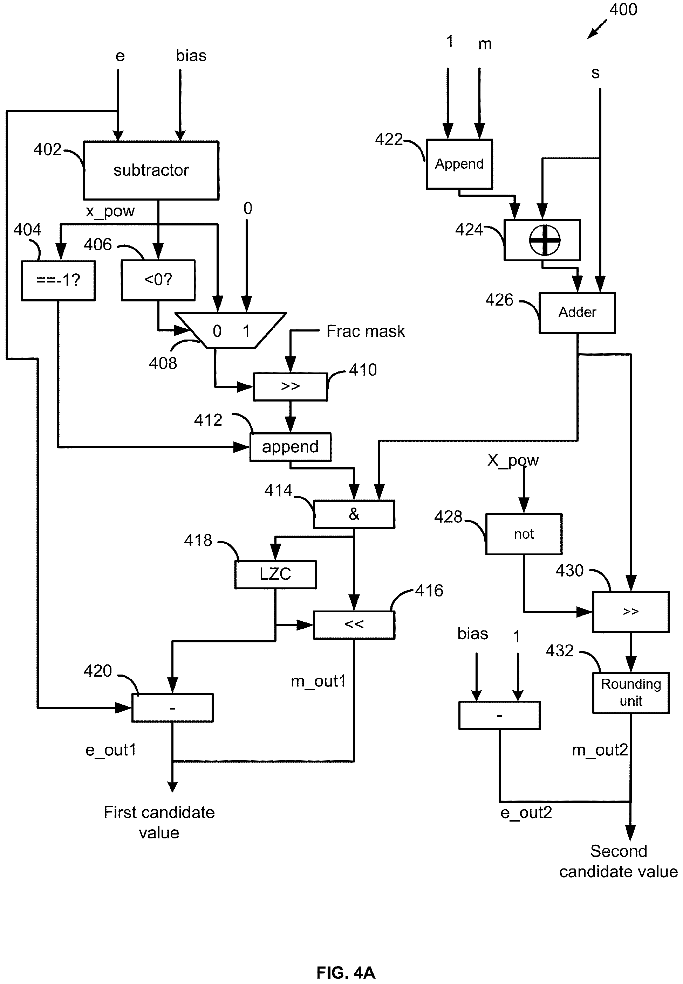

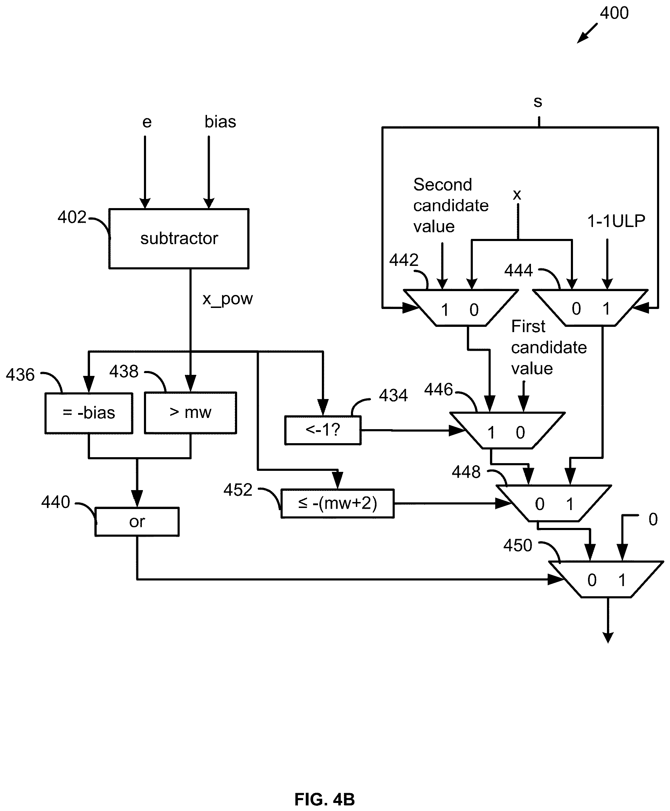

FIG. 4A and 4B show the architecture of the dedicated hardware unit for determining the value of *frac(x).* FIG. 4A shows the first part of the hardware unit with two split paths each determining an output based on two of the above cases (case 2 and 4) are determined. FIG. 4B illustrates a second part of the same hardware unit receiving the output from the first part in FIG. 4A and determining and selecting the value of frac (x) as the output depending on all 5 cases (cases 1-5) discussed above.

FIG. 4A comprises a hardware unit 400a for calculating the output value of *frac(x).* The hardware unit 400 receives an input floating-point number (x) comprising a mantissa (m) having a bit length of *'mw'* bits, an exponent (e) having a bit length of *'ew'* bits, a sign bit (s) and a bias of the exponent (e). The floating-point number x represents a value as set out in equation (2): *x* = (-1)*^{s}* · 2*^{e-bias}* · 1.*m*, where bias= 2^{ew-1} - 1, where ew is the number of bits of the exponent e, and where *1.m* is the significand.

The hardware unit 400 comprises two different paths of logic units. The value of *frac(x)* for case 2 defined above, i.e. 0.5 <= |*x*| < 2*^{mw}*, is determined by following a first path of logic units as explained below. The first path of logic units is configured to generate a frac mask, apply the frac mask on the significand and renormalise the masked output to generate a first candidate value to be outputted as the value of *frac(x).* The hardware unit comprises a subtractor 402 receiving the exponent (e) and the bias as input. The subtractor 402 subtracts the bias from the exponent to calculate the power (x_pow) of the input floating-point number (x). The calculated x_pow is provided to each of a first comparison unit 404, a second comparison unit 406 and mux 408. The mux 408 takes x_pow as a first input and a value '0' as a second input. At the second comparison unit 406, x_pow is compared with 0. If x_pow<0, then mux 408 outputs 0 as input to the shifter 410. If x_pow>0, then x_pow is output by mux 408 as input to the shifter 410. Based on the input received from the mux 408, a frac mask is generated at shifter 410. The shifter 410 receives as a inputs the value from the mux 408 and an initial *frac mask* in the form of a string of 1s having a bit length of *'mw'* bits. The shifter 410 shifts the initial *frac mask* based on the input from the mux 408. If the input is 0, the frac mask is not shifted as all the bits of the significand represent fractional part. If the input from mux 408 is the calculated x_pow, the *frac mask* is shifted based on the value of x_pow to align the *frac mask* with the fractional part of the significand as explained in FIG.3B. Further if the value of x_pow is determined to be equal to -1 by the first comparison unit 404, then an extra bit is added to the *frac mask* at the appending unit 412 to account for the sign bit. Thus, the *frac mask* would have a bit length of *mw*+1 bits if x_pow=-1. The *frac mask* is further provided to the masking unit 414.

Further the signed significand of the input floating-point number (x) is determined based on the mantissa (m) and the sign bit (s). The mantissa m is appended with 1 bit at an appending block 422 to generate the significand 1.m. Inversion unit 424 receives the significand from appending block 422 and the input sign bit (s) and inverts (i.e. flips each bit to change 0 bits to 1 bits and to change 1 bits to 0 bits) the significand based on the input sign bit (s). If the input sign bit (s) represents that the input floating-point number (x) is a positive number, then the significand is not inverted. Hence a non-inverted significand (or the same significand 1.m) is provided as output of the inversion unit 424. However, if the sign bit (s) represents that the input floating-point number (x) is a negative number then the significand is inverted (by flipping each bit of the significand). In either case, the output of the inversion unit 424 is provided to an adder 426 (or incrementor). The adder adds the input sign bit (s) to the output of the inversion unit 424. Thus, if the input floating-point number (x) is a positive number the adder 426 adds 0 (the input sign bit) to the non-inverted significand thus generating an (implicitly) signed significand. Further, if the input floating-point number (x) is a negative number the adder 426 adds 1 (the input sign bit) to the inverted significand this generating the (implicitly) signed significand. The implicitly signed significand output by adder 426 is a two's complement representation excluding the sign bit. In a conventional 'full' two's complement representation, positive values are represented in the usual (binary) way with a leading 0 sign bit. Negative values are represented in conventional 'full' two's complement by flipping each bit of the binary representation, then adding 1 to the resulting value (ignoring any carry over) and then adding a leading 1 sign bit. In the present case, for an efficient hardware implementation, it has been realised that the sign bit of the two's compliment is not needed to be stored for the scenarios that this hardware is needed to generate values of *frac(x)* for. This is because, in the relevant cases, the sign bit would always be the opposite of the next most significant bit, which is the leading 1 bit added to the significand by append unit 422 and then optionally flipped to a zero bit at inversion unit 424 for a negative number. As a result, that next most significant bit can be used to deduce the sign (where a 1 bit indicates a positive number, and a 0 bit indicates a negative number), and so the two's complement representation of the significand without the (conventional) leading sign bit is referred to herein as the implicitly signed significand. Thus the implicitly signed significand is provided to the masking unit 414. It is also provided to the shifter 430, as part of another calculation path considered further below. The signed significand provided to the masking unit 414 is used as part of determining the first candidate value of *frac(x).*

Masking unit 414 receives the aligned *frac mask* from the shifter 410 and the signed significand from the adder 426 and performs a bit wise AND operation for applying the *frac mask* on the signed significand. The result obtained from the masking unit comprises a number of leading zeros. To identify the value of the mantissa (*m_out1*) of the first candidate value the number of zeros in the significand at the output of the masking unit 414 is calculated at Leading Zero Counter (LZC) 418. The normalizing unit (a shifter) 416 shifts the result obtained from the masking unit 414 to the left to normalize the result based on the output of the LZC 418. The shifted output from normalizing unit 416 is the value of the mantissa *(m_out1)* of the first candidate value. To identify the value of the exponent (*e_out1*) the count of zeros is provided from LZC 418 to the subtractor 420. The subtractor 420 subtracts the count of zeros from the input exponent to obtain the value of exponent corresponding to the normalized mantissa output. The value of mantissa (*m_out1*) and exponent (*e_out1*) thus determined form the first candidate value of *frac(x),* which is the correct value of *frac(x)* if x satisfies case 2 described above.

Now the value of *frac(x)* for case 4, i.e. when -0.5 *< x <* -2^{-*mw*-2}, can be determined via following the second path of logic units. The second path of logic units is configured to shift the significand and round the shifted output to generate a second candidate value to be outputted as the value of *frac(x).* As explained earlier, as part of the first path in connection with the calculation of the first candidate value of *frac(x),* the (implicitly) signed significand of the input floating-point number (x) is determined based on the mantissa (m) and the sign bit (s). In case 4, x is always negative, and so determining the implicitly signed significand comprises determining the significand (at the appending block 422), inverting the significand (at the inverting unit 424) and adding 1 (at the adder 426, because the incoming sign bit is always 1 for the negative numbers of case 4). In case 4, as for case 2 the implicitly signed significand is the two's complement representation of the input floating-point number (x) excluding the conventional sign bit. Also, in case 4, all the bits of the significand represent the fractional part, therefore the implicitly signed significand is shifted to the right to determine the normalised value of *frac(x).* To achieve this, the signed significand and the inverted value of x_pow are provided to the shifter 430. The signed significand is shifted to the right based on the inverted value of x_pow. The shifted output is further rounded at the rounding unit 432 to obtain the mantissa *(m_out2).* Further the exponent (e_out2) is obtained by subtracting 1 from the bias. The value of mantissa (m_out2) and exponent (e_out2) thus determined form the second candidate value.

The first and second candidate values are provided to the second part of the hardware unit illustrated in FIG. 4B. The second part of the hardware unit 400 is a selection circuitry and the selection is performed based on the calculated value of x_pow from the subtractor 402. The selection circuitry comprises a plurality of mux 442-450, each mux-ing an output based on the value of calculated x_pow. In another implementation it is also possible to perform the selection based on the exponent (e) of the input floating-point number (x) by adjusting the constants. It would also be known to a skilled person in the art that there are countless ways to rearrange the mux-es to create slightly different design while achieving the same results.

As explained earlier, the exponent (e) and the bias are provided to a subtractor 402. The subtractor subtracts the bias from the exponent to calculate the power (x_pow) of the input floating-point number (x). Based on the input floating-point number (x) and the value of x_pow, the plurality of muxes selects one of its inputs and provides an output. The calculated x_pow is compared with various values at units 434, 436, 438 and 452. One of the output of the comparison from these logic gates or the sign bit acts as a control signal for the plurality of mux 442 to 450.

The first mux 442 receives the input floating-point number (x) and the second candidate value as inputs and the sign bit as the control signal. The first mux 442 selects and outputs the second candidate value when the sign bit is negative and selects and outputs the input floating-point number (x) when the sign bit is positive. The second mux 444 receives the input floating-point number (x) and 1-1ULP as inputs and the sign bit as the control signal. The second mux 444 selects and outputs 1-1 ULP when the sign bit is negative and selects and outputs the input floating-point number (x) when the sign bit is positive.

Consider that the input floating-point number (x) satisfies 0 < *x* < 0.5. Therefore, the sign bit (s) of the input floating-point number (x) is 0 as x is a positive number. In this case the first mux 442 and the second mux 444 select the value of x as the output. The first mux 442 provides the value of x as the input to the third mux 446. The second mux 444 provides the value of x as the input to the fourth mux 448. The third mux 446 receives the first candidate value and value of x from the first mux 442 as the input. The third mux 446 selects the first candidate value or value of x based on the calculated value of x_pow. It is checked at unit 434 if the calculated x_pow is <-1. When the value of x is within the boundaries of 0 < *x* < 0.5 the calculated x_pow is less than -1. Therefore, the third mux 446 selects value of x and outputs it to the fourth mux 448. The fourth mux 448 receives two inputs, which in this case are both x, from the third mux 446 and the second mux 444. It is checked at unit 452 if the calculated x_pow ≤-(*mw+*2). Since the input floating-point number (x) is a positive number power cannot be *<-(mw+2).* Hence the fourth mux 448 selects the input x from the second mux and provides it as input to the fifth mux 450. The fifth mux 450 receives the output from the fourth mux 448, which in this case is the input floating-point number (x), and 0 as inputs. It is checked at unit 436 if the calculated x_pow is equal to '-bias' (to identify if the input floating-point number (x) is zero or denormal) and at unit 438 if the calculated x_pow > *mw.* Since the value of x is within the boundaries of 0 < *x* < 0.5 the calculated x_pow is less than *mw.* Therefore fifth mux 450 selects the output from the fourth mux 448, i.e. the value x, as the output i.e. value of *frac(x).* in other words, the hardware unit is configured to output the value of *frac(x)* as 'x' if x_pow< -1 the input floating-point number x is positive.

Consider that the input floating-point number (*x*) is within the boundaries 0.5 <= |*x*| < 2*^{mw}* . Therefore, the sign bit (*s*) of the input floating-point number (*x*) may be 1 or 0 depending on whether the input floating-point number (*x*) is positive or negative. If the sign bit (*s*) is 0, the first mux 442 and the second mux 444 select the value of x as their outputs; the first mux provides the value of x as the input to the third mux 446, and the second mux 444 provides the value of x as the input to the fourth mux 448. If the sign bit (*s*) is 1, the first mux 442 and the second mux 444 select the second candidate value and 1-1ULP as their respective outputs; the first mux 442 provides the second candidate value as the input to the third mux 446, and the second mux 444 provides the 1-1ULP as the input to the fourth mux 448. The third mux receives the output of the first mux442 as a first input and the first candidate value as a second input. It is checked at unit 434 if the calculated x_pow is <-1. When the value of x is within the boundaries of 0.5 <= |*x*| < 2*^{mw}* the calculated x_pow is not less than -1. Since x_pow >-1, the third mux 446 selects the first candidate value and outputs it to the fourth mux 448. The fourth mux 448 receives the first candidate value from the third mux 446 and one of the inputs of the second mux 444 as inputs. It is checked at unit 452 if the calculated x_pow ≤-(*mw+*2). Since x_pow>-1, x_pow cannot be *<-(mw+2).* The comparison triggers the fourth mux 448 to select and output the first candidate value to the fifth mux 450. The fifth mux 450 receives a first input value from the fourth mux 448, in this case the first candidate value, and 0 as a second input. It is checked at unit 436 if the calculated x_powis equal to '-bias' and at unit 438 if the calculated x_pow > *mw.* Since x_pow < *mw,* fifth mux 450 selects the output from the fourth mux 448, the first candidate value, as the output i.e. the value of *frac(x).* In other words, the hardware unit is configured to output the value of *frac (x)* as the first candidate value, if the comparison indicates -1≤ x_pow *<mw.* As explained in FIG.4A the first candidate value is determined by applying a mask to the input floating-point number x to generate a masked result and renormalizing the masked result.0.5 <= |*x*| < 2*^{mw}* .

Consider that the input floating-point number (*x*) is within the boundaries-0.5 < *x <* -2^{-*mw*-2}. This represents negative numbers between -0.5 and -2^{-*mw*-2}. Therefore, the sign bit (*s*) of the input floating-point number (*x*) is 1. Since sign bit s =1, the first mux 442 provides the second candidate value as the input to the third mux 446. The second mux 444 provides the 1-1 ULP value as the input to the fourth mux 448. It is checked at unit 434 if the calculated x_pow is <-1. When the value of x is within the boundaries of -0.5 and -2^{-*mw*-2} the calculated x_pow is less than -1. Since x_pow is <-1, the third mux 446 selects the output from the first mux 442, in this case the second candidate value, and outputs it to the fourth mux 448. The fourth mux 448 receives the second candidate value from third mux 446 and 1-1 ULP from second mux 444. Now, it is checked at block 452 if the value of x_pow is ≤ *-(mw*+2). Since x_pow is >-*(mw*+2), the fourth mux 448, selects and outputs the output from the third mux 446, in this case the second candidate value, as input to the fifth mux 450. The fifth mux 450 receives a first input value from the fourth mux 448, in this case the second candidate value, and 0 as a second input. It is checked at unit 436 if the calculated x_pow is equal to '-bias' and at unit 438 if the calculated x_pow > *mw.* Since power < *mw,* fifth mux 450 selects the output from the fourth mux 448, in this case the second candidate value, as the output i.e. the value of *frac(x).* In other words, hardware unit is configured to output the second candidate value as the value of *frac (x),* if the comparison indicates input floating-point number x is negative and *-(mw+2)* < x_pow <-1. The second candidate value is determined, as explained in FIG. 4A, by negating the bits of the input floating-point number x, followed by steps of right shifting the negated number and rounding. If the rounded value is 1, output the value of *frac(x)* is set to be a value below 1, otherwise output the value of *frac(x)* to be the rounded value.

Consider that the input floating-point number (*x*) is within the boundaries - 2^{-*mw*-2} ≤ *x* ≤ 0. This represents small negative numbers between 0 and -2^{-*mw*-2}. Therefore, the sign bit (*s*) of the input floating-point number (*x*) is -1. Since the sign bit s=1, the first mux 442 provides the second candidate value as the input to the third mux 446. The second mux 444 provides the 1-1 ULP as the input to the fourth mux 448. It is checked at unit 434 if the calculated x_pow is <-1. When the value of x is within the boundaries of 0 and -2^{-*mw*-2} the calculated x_pow is less than -1. Since x_pow is <-1, the third mux 446 selects the output from the first mux 442, in this case the second candidate value, and outputs it to the fourth mux 448. Now, it is checked at block 452 if the value of x_pow is ≤ *- (mw+2).* Since the value of power (x_pow) is ≤ *-(mw*+2), the fourth mux selects output from the second mux 444, in this case 1-1ULP, and outputs 1-1ULP to the fifth mux 450. The fifth mux 450 receives a first input value from the fourth mux 448, in this case 1-1ULP, and 0 as a second input. It is checked at unit 436 if the calculated x_pow is equal to '-bias' and at unit 438 if the calculated x_pow > *mw.* Since x_pow < *mw,* fifth mux 450 selects the output from the fourth mux 448, in this case 1-1 ULP, as the output i.e. the value of *frac(x).* In other words, the hardware unit is configured to output the value of *frac(x)* as 1-1ULP, if x_pow ≤-(*mw*+2) and the input floating-point number x is negative.

Consider that the input floating-point number (x) is within the boundaries |*x*| >= 2*^{mw}*. The input floating-point number (x) may be a positive number or a negative number whose x_pow ≥*mw.* In this scenario, the outputs of the first mux 442, second mux 444, third mux 446 and fourth mux 448 do not matter. The fifth mux 450 receives input values 0 and the output of fourth mux 448. It is checked at unit 436 if the calculated x_pow is equal to '-bias' and at unit 438 if the calculated x_pow > *mw.* Since x_pow *> mw,* the fifth mux 450 selects the 0 as the output i.e value of *frac(x).* In other words, the hardware unit is configured to output the value of *frac(x)* as 0, if the x_pow ≥ *mw.*

Therefore, the hardware unit is configured to determine a first candidate value of *frac(x)* by applying a mask to the input floating-point number x to generate a masked result, and renormalizing the masked result, and to determine a second candidate value of *frac(x)* by negating the bits of the input floating-point number x, followed by steps of right shifting the negated number and rounding. The hardware unit is configured to select the first candidate value as the value of *frac(x),* if 0.5 <= |x| *<* 2*^{mw}* i.e. -1 ≤ x_pow *<mw,* or select the second candidate value as the value of *frac(x),* if -0.5 < x <= *-2*^{*-*(*mw*+2)} i.e. *-*(*mw*+2) < x_pow <-1 or select 0 (a the third candidate value) as the value of *frac(x),* if x is an integer or zero i.e. x_pow ≥ *mw,* or select x (a fourth candidate value) as the value of *frac(x)* if 0 < x < 0.5 i.e. x_pow <-1 or select 1-1ULP (a fifth candidate value) as the value of *frac(x),* if -2^{-(*mw*+2)} ≤ x ≤ 0 i.e. x_pow ≤-(*mw+*2).

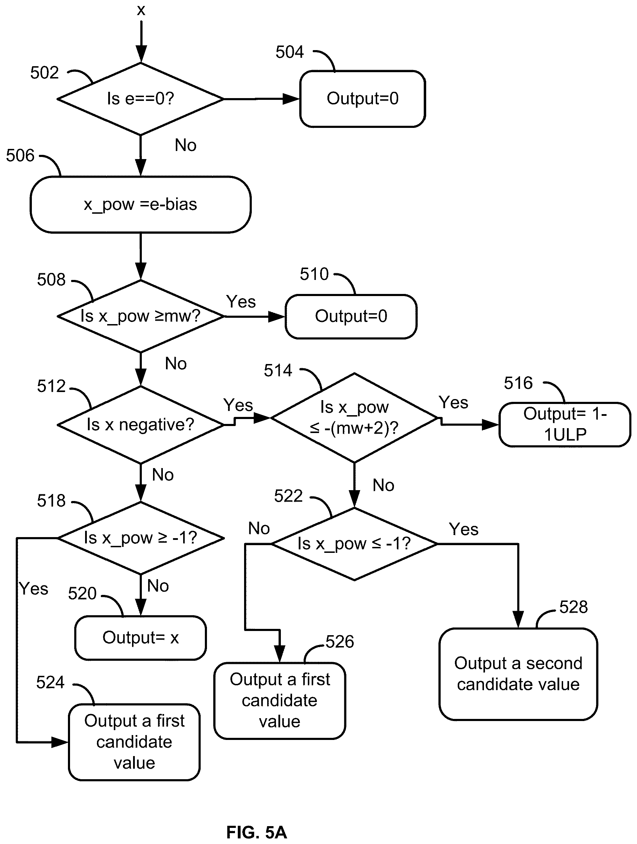

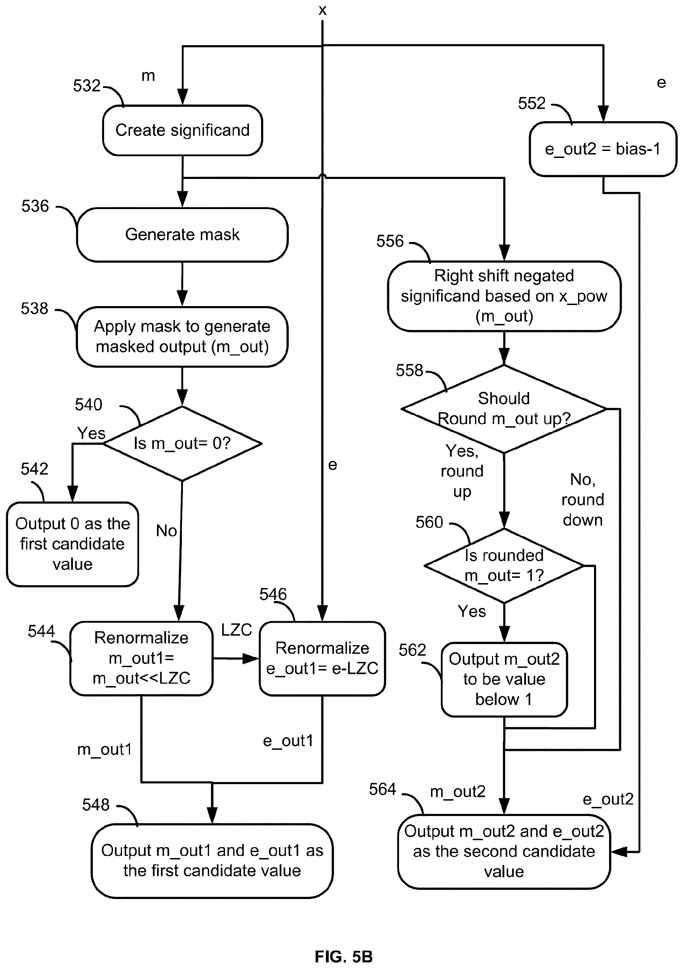

FIG. 5A and 5B illustrates the flow diagram of the method of determining the value of *frac(x)* of an input floating-point number x. At 502, the method comprises receiving, by a hardware unit, an input floating-point number (*x*) comprising a mantissa (m) having a bit length of *'mw'* bits, an exponent (*e*) having a bit length of '*ew'* bits, a sign bit (*s*) and a bias of the exponent (*e*). The value of floating-point number x can be determined from equation (2): *x =* (-1)*^{s}* · 2*^{e-bias}* · 1.*m*, where bias= 2^{ew-1} - 1, where ew is the number of bits of the exponent (*e*), and where 1.*m* is the significand. At 502, the exponent (*e*) is compared to 0. When *e*==0, the input floating-point number (*x*) is zero or a denormal number. In such as case, the at step 504, output 0 as the value of *frac(x).*

If 'No', at step 502, i.e. *e* ≠ 0, then at step 506 a value of power of x, x_pow is calculated as e-bias. Further at step 508, it is determined if the x_pow ≥ *mw.* If, yes, then the number is an integer and all the bits of the significand represents an integer value and hence the at step 510, '0' is output as the value of *frac(x).*

If 'No', at step 508, i.e. if x_pow < *mw,* it is determined if the input floating-point number (*x*) is a negative number. if so, at step 514 it is determined that if x_pow ≤ *-(mw+2).* If yes, x is a very small negative number and hence the fractional part would be very close to '1' and hence on rounding would be '1'. Therefore, at step 516, the value of *frac(x)* is output as 1-1 ULP.

If 'No' at step 512 i.e. x is a positive number, then it is determined at step 518, if x_pow ≥ - 1. If 'No' at step 518, i.e. if *x* is a positive number and x_pow <-1, then *x* is within the boundaries 0 < x < 0.5. Hence, all the significand bits *(1.m)* of x represents the fractional part of the number. Therefore, at step 520, the value of *frac(x)* is output as x.

If 'Yes' at 518, i.e. x_pow ≥ -1, and x is a positive number and x_pow *<mw* as determined in steps 512 and 508 respectively, then x is within the boundaries 0.5 <= *x* < 2*^{mw}* . In this case a first candidate value is output as the value of *frac(x)* at step 524. Also if 'No at 522, i.e. x_pow ≥ -1, and x is a negative number and x_pow > *-(mw+2)* as determined in steps 512 and 514 respectively, then x is within the boundaries -0.5 <= *x* < -2*^{mw}* and the first candidate value is output as the value of *frac(x)* at step 526. The first candidate value is pre-calculated as explained in FIG. 5B. In general, these two ranges can be defined as the 0.5 <= |*x*| < 2*^{mw}.*

If 'Yes' at step 522, i.e x_pow ≤ -1, and if it is determined that x is negative and x_pow > - (*mw+*2) at steps 512 and 514 respectively, then *x* is within the boundaries -0.5 < *x* <= -2^{-*mw*-2}. In this case, a second candidate value is output as the value of *frac(x) at step 528.* The second candidate value is pre-calculated as explained in FIG. 5B.

FIG. 5B illustrates flow diagram of the method of calculating the value of the first candidate value and the second candidate value to be output as the value of *frac(x).* The method comprises receiving, by a hardware unit, an input floating-point number (*x*) comprising a mantissa (*m*) having a bit length of *'mw'* bits, an exponent (*e*) having a bit length of 'ew' bits, a sign bit (*s*) and a bias of the exponent (*e*).

As explained in FIG. 5A, if x_pow ≥ -1, and x is a positive number and x_pow *<mw* as determined in steps 522, 512 and 508 respectively, then x is within the boundaries 0.5 <= x < 2*^{mw}* . In this scenario a first candidate value is output as the value of *frac(x).* Also, if x_pow ≥ -1, and x is a negative number and x_pow *> -(mw+2)* as determined in steps 522, 512 and 514 respectively, then x is within the boundaries -0.5 <= *x* < -2*^{mw}* and the first candidate value is output as the value of *frac(x).* In general, these two scenarios can be defined as 0.5 <= |*x*| < 2*^{mw}*, i.e. the case 2 described above. The first candidate value can be determined by applying a *frac mask* and renormalising the masked output as explained below.

The method, at step 532, receives the mantissa (*m*) of the input floating-point number (*x*) and creates a significand. In the first scenario of case 2 above, i.e. when *x* is within the boundaries 0.5 *<= x <* 2*^{mw}, x* is a positive number and hence the created significand is an (implicitly) signed significand represented as 1.*m*. However, in the second scenario of case 2, i.e. *x* is within the boundaries -0.5 <= *x* < -2*^{mw}*, x is a negative number and hence the (implicitly) signed significand is created by adding a leading 1 to the mantissa bits, then flipping all the bits, and then adding 1. The (implicitly) signed significand (0. *~m*+1) is therefore the significand represented in two's complement form excluding the sign bit. As explained above, in an efficient two's compliment representation the sign bit need not be stored as the sign can be inferred.

Once the significand is created at step 532, then the method comprises generating a *frac mask* at step 536. An initial *frac mask is* received as a string of 1s having a bit length of *'mw'* bits. The *frac mask* is shifted based on the calculated power to align the *frac mask* with the significand based on the value of x_pow.

Once the mask is generated, the aligned *frac mask* is applied on the significand at step 538. The *frac mask* may be applied by performing a bit wise AND operation between the aligned *frac mask* and the significand. If the masked output (m_out) is 0 at step 540, then the 0 is output as the value of *frac(x)* or as the first candidate value at step 542. If the masked output ≠ 0 at step 540, then the masked output (m_out) is re-normalized at step 544 as the masked output may comprise a number of leading zeros. The leading zeros in the masked output is counted and masked output is normalized by shifting the masked output to the left to obtain the renormalized significand (m_out1) of the first candidate value.

In parallel to the calculation of the renormalized m_out of the first candidate value, the calculation of the exponent (e_out1) of the first candidate value begins. The exponent of the first candidate value is calculated by normalizing input exponent (e) at step 546 by subtracting from the input exponent the count of leading zeros that the masked output was shifted by at step 544 to obtain the normalized exponent (e_out1) of the first candidate value corresponding to the normalized significand of the first candidate value. The renormalized significand and renormalized exponent of the first candidate value is output at step 548 in Fig. 5B as the value of *frac(x)* for step 524 or 526 in Fig. 5A.

Further, as explained in FIG. 5A, if x_pow ≤ -1, and if x is negative and x_pow> *-(mw+2)* as determine at steps 522, 512 and 514 respectively, then *x* is within the boundaries -0.5 < *x <* -2^{-*mw*-2}, i.e. case 4 described above. In this case, as *x* is a negative number, therefore the significand is created as explained for the second scenario of case 2 explained above (i.e. when x is within the boundaries -0.5 <= *x* < -2*^{mw}*, *x* is a negative number). Thus the (implicitly) signed significand for a negative number x is created by adding a leading 1 bit, then flipping all the bits and adding 1. The (implicitly) signed significand (0. *~m*+1) is therefore the significand represented in two's complement form excluding the sign bit. Since the value of *x* is within the boundaries -0.5 < *x* < -2^{-*mw*-2} , all the bits of the significand represent the fractional part. Therefore, there is no need of applying a *frac mask* in this case. Hence, at step 556, the significand is shifted to the right based on the value of x_pow (i.e. e-bias) to obtain the shifted significand (m_out).

The shifted significand (m_out) is further rounded to obtain the second candidate value. At step 558, it is checked if the shifted significand should be rounded up. If so, at step 560, it is checked if the rounded shifted significand (m_out) is equal to 1. If the rounded value is 1, then, at step 562, a value below 1 is output as the second candidate value. This ensures the hardware never returns a value of 1 for *frac(x)* due to rounding. If 'No' either at step 558 (i.e. the shifted significand (m_out) is rounded down) or at 560 (i.e. the rounded up shifted significand is not equal to 1) then the rounded value is output as the mantissa (m_out2) of the second candidate value. The exponent (e_out2) of the second candidate value is calculated at step 552 by subtracting 1 from the bias. The mantissa (m_out2) and exponent (e_out2) of the second candidate value is output as the value of *frac(x)* for this case at step 564.

The dedicated hardware (as explained with respect to FIG. 4A and 4B) compared to the basic implementation (explained in FIG.1) is improved in terms of latency and power, performance and area (PPA). For example, consider the frac instruction: $frac \left(x\right) = x - floor \left(x\right) or frac \left(x\right) = min \left\{x-floor\left(x\right);0x1.fffffep-1f\right\} ,$ where 0*x*1*.fffffep -* 1*f* is the floating-point number before one.1

In the context of a floating-point pipeline, hardware (e.g. an ALU), using the basic implementation, evaluates the frac instruction by mapping the operations "floor", "-", and "min", into ALU opcodes INT, ADD, and CMPM respectively to form the following sequence. INT represents integer, ADD represents addition and CMPM represents compare and move.
INT x, RTN, r0
ADD x, r0(neg), r1
CMPM r1, 3F7FFFFF, LT, r2

However, using the dedicated hardware is the frac instruction can be evaluated by a single instruction
FRAC, x, RNE, r0

The basic hardware (ALU) has 4 cycle latency and with 2 cycle forwarding. Therefore, using that basic implementation, the hardware would require three separate instructions to calculate the fractional part for a total latency of 12 or 8 cycles with forwarding. However, with the dedicated hardware, only one instruction is required, taking 4 cycles from input to output (or 2 when forwarded), making it the preferred implementation in terms of performance. Similarly, the basic implementation being large (having a full subtractor / adder) consumes more dynamic power when compared to dedicated hardware unit in FIG. 4A and 4B. Also, the basic implementation comprises a subtraction unit which typically has a critical path from the exponents into the shifting alignments of the significands, through the adder, and then through a normaliser back into the exponents. However, for the dedicated hardware unit described herein, the critical path is associated with case 4 and is much shorter through a two's complement of the significand followed by shifting and rounding. Further, the expensive addition step is replaced by a simple increment. Also, for single precision floating-point numbers the LZC block has lower delay than the increment such that the total delay associated with case 2 is smaller than case 4.

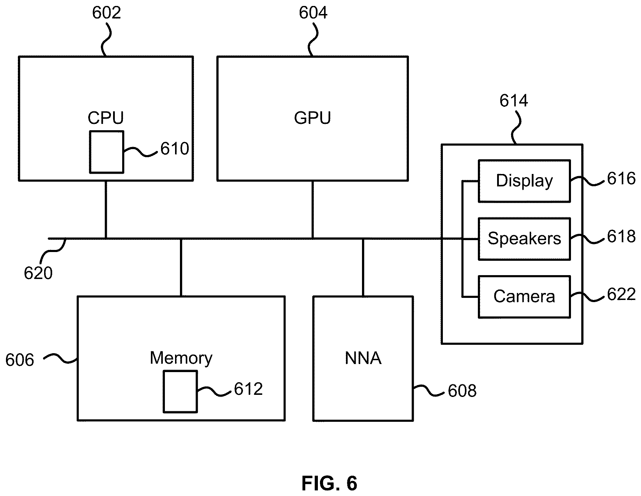

FIG. 6 shows a computer system in which processing systems described herein may be implemented. The computer system comprises a CPU 602, a GPU 604, a memory 606, a neural network accelerator (NNA) 608 and other devices 614, such as a display 616, speakers 618 and a camera 622. A processing block 610 is implemented on the CPU 602. In other examples, one or more of the depicted components may be omitted from the system, and/or the processing block 610 may be implemented on the GPU 604 or within the NNA 608. The components of the computer system can communicate with each other via a communications bus 620. A store 612 (is implemented as part of the memory 606.

The hardware 400 for determining the value of *frac(x)* in FIG.4A and 4B are shown as comprising a number of functional blocks. This is schematic only and is not intended to define a strict division between different logic elements of such entities. Each functional block may be provided in any suitable manner. It is to be understood that intermediate values described herein as being formed by a hardware 400need not be physically generated by the hardware 400at any point and may merely represent logical values which conveniently describe the processing performed by the hardware 400between its input and output.

The hardware 400described herein may be embodied in hardware on an integrated circuit. The hardware 400described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware (such as logic circuitry), or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), readonly memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a hardware 400 configured to perform any of the methods described herein, or to manufacture a hardware 400comprising any apparatus described herein. An integrated circuit definition dataset may be, for example, an integrated circuit description.

Therefore, there may be provided a method of manufacturing, at an integrated circuit manufacturing system, a hardware 400 as described herein. Furthermore, there may be provided an integrated circuit definition dataset that, when processed in an integrated circuit manufacturing system, causes the method of manufacturing a hardware 400 to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

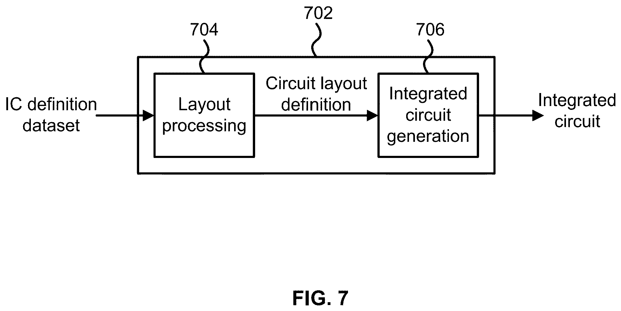

An example of processing an integrated circuit definition dataset at an integrated circuit manufacturing system so as to configure the system to manufacture a hardware 400 will now be described with respect to FIG. 7.

FIG. 7 shows an example of an integrated circuit (IC) manufacturing system 702 which is configured to manufacture a hardware 400as described in any of the examples herein. In particular, the IC manufacturing system 702 comprises a layout processing system 704 and an integrated circuit generation system 706. The IC manufacturing system 702 is configured to receive an IC definition dataset (e.g. defining a hardware 400 as described in any of the examples herein), process the IC definition dataset, and generate an IC according to the IC definition dataset (e.g. which embodies a hardware 400 as described in any of the examples herein). The processing of the IC definition dataset configures the IC manufacturing system 702 to manufacture an integrated circuit embodying a hardware 400, as described in any of the examples herein.

The layout processing system 704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 704 has determined the circuit layout it may output a circuit layout definition to the IC generation system 706. A circuit layout definition may be, for example, a circuit layout description.

The IC generation system 706 generates an IC according to the circuit layout definition, as is known in the art. For example, the IC generation system 706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 706 may be in the form of computer-readable code which the IC generation system 706 can use to form a suitable mask for use in generating an IC.

The different processes performed by the IC manufacturing system 702 may be implemented all in one location, e.g., by one party. Alternatively, the IC manufacturing system 702 may be a distributed system such that some of the processes may be performed at different locations and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a hardware 400, without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 7 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 7, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A hardware unit for outputting a value of *frac(x),* where *frac(x)* is defined as x *-floor(x),* wherein the hardware unit is configured to:
receive an input floating-point number x having a mantissa (m) of bit width *'mw',* an exponent (e) of bit width *'ew',* a sign bit (s) and an exponent bias (bias);
calculate power (x_pow) of the input floating-point number x, wherein x_pow= e-bias;
compare the x_pow to (i) -1 and (ii) *mw;* and
output the value of *frac(x),* wherein:
the hardware unit is configured to output the value of *frac(x),* if the comparison indicates -1≤ x_pow *<mw,* by applying a mask to the input floating-point number x to generate a masked result, and renormalizing the masked result; and
the hardware unit is configured to output the value of *frac(x)* if the comparison indicates input floating-point number x is negative and *-(mw+2)* <x_pow<-1, by negating the bits of the input floating-point number x, followed by steps of right shifting the negated number and rounding, wherein if the rounded value is 1, the output value of *frac(x)* is a value below 1, otherwise the output value of *frac(x)* is the rounded value.

2. The hardware unit as claimed in claim 1, wherein the hardware unit is configured to:
determine a first candidate value as the value of *frac(x)* by applying a mask to the input floating-point number x to generate a masked result, and renormalizing the masked result;
determine a second candidate value as the value of *frac(x)* by negating the bits of the input floating-point number x, followed by steps of right shifting the negated number and rounding, and if the rounded value is 1, then the second candidate value of *frac(x)* is set to be a value below 1;
select, by the hardware unit, the first candidate value as the value of *frac(x),* if -1≤ x_pow *<mw;* and
select, by the hardware unit, the second candidate value as the value of *frac(x),* if the input floating-point number x is negative and *-(mw+2)* <x_pow<-1.

3. The hardware unit as claimed in claims 1 or 2, wherein if -1≤ x_pow<mw, and if the input floating-point number is negative the hardware unit is configured to determine the implicitly signed significand of the input floating-point number x before applying the mask.

4. The hardware unit as claimed in claim 1, wherein the hardware unit is further configured to:
output the value of *frac(x)* as 0, if the x_pow ≥ *mw;*
output the value of *frac(x)* as 'x' , if x_pow <-1 and the input floating-point number x is positive; and
output the value of *frac(x)* as 1-1ULP, if x_pow ≤ *-(mw+2)* and the input floating-point number x is negative.

5. The hardware unit as claimed in claim 1, wherein the hardware unit is configured to, on identifying that the input floating-point number is a denormal number:
output the value of *frac(x)as* x, if the denormal number is a positive number; and
output the value of *frac(x)* as 1-1 ULP, if the input denormal number is negative number.

6. The hardware unit as claimed in claim 1, the hardware unit is configured to:
determine a first candidate value by applying a mask to the input floating-point number x to generate a masked result, and renormalizing the masked result;
determine a second candidate value by negating the bits of the input floating-point number x, followed by steps of right shifting the negated number and rounding;
determine a third candidate value as 0;
determine a fourth candidate value as x;
determine a fifth candidate value as 1-1ULP;
select, by the hardware unit, the first candidate value as the value of *frac(x),* if -1≤ x_pow <*mw*;
select, by the hardware unit, the second candidate value as the value of *frac(x),* if the input floating-point number x is negative and *-(mw+2)* <x_pow<-1, wherein if the second candidate value is 1, then the second candidate value is set to be a value below 1;
select, by the hardware unit, the third candidate value of as the value of *frac(x),* if the x_pow ≥ *mw*;
select, by the hardware unit, the fourth candidate value as the value of *frac(x),* if x_pow<-1 and the input floating-point number *x* is positive; and
select, by the hardware unit, the fifth candidate value as the value of *frac(x),* if x_pow ≤ - (*mw+*2) and the input floating-point number *x* is negative;
and optionally wherein the hardware unit is further configured to, on identifying that the input floating-point number is a denormal number:
select, by the hardware unit, the fourth candidate value as the value of *frac(x),* if the input floating-point number x is a positive denormal number; and
select, by the hardware unit, the fifth candidate value of as the value of *frac(x),* if the input floating-point number x is a negative denormal number.

7. A computer-implemented method of outputting a value of *frac(x),* where *frac(x)* is defined as x *-floor(x),* wherein the method comprises:
receiving an input floating-point number x having a mantissa (m) of bit width *'mw',* an exponent (e) having a bit width *'ew',* a sign bit (s) and an exponent bias (bias);
calculating power (x_pow) of the input floating-point number x, wherein x_pow= e-bias;
comparing the x_pow to (i) -1 and (ii) *mw;* and
outputting a value of *frac(x),* wherein:
if -1≤ x_pow *<mw,* the outputting value of *frac(x),* comprises applying a mask to the input floating-point number x to generate a masked result, and renormalizing the masked result and outputting the masked result as the value of *frac(x);* or
if the input floating-point value x is a negative and *-(mw+2)* <x_pow <-1, the outputting value of *frac(x)* by negating the bits of the input floating-point number x, followed by steps of right shifting the negated number and rounding, wherein if the rounded value is 1, the output value of *frac(x)* is a value below 1, otherwise the output value of *frac(x)* is the rounded value.

8. The method as claimed in claim 7, wherein the method comprises:
determining a first candidate value by applying a mask to the input floating-point number x to generate a masked result, and renormalizing the masked result;
determining a second candidate value by negating the bits of the input floating-point number x, followed by steps of right shifting the negated number and rounding;
selecting the first candidate value as the value of *frac(x),* if -1≤ x_pow *<mw;* and
selecting the second candidate value as the value of *frac(x),* if input floating-point number x is negative and *-(mw+2)* <x_pow<-1, wherein if the second candidate value is 1, then the second candidate value of is set to be a value below 1.

9. The method as claimed in claim 7, wherein the method further comprises:
outputting the value of *frac(x)* as 0, if the x_pow ≥ *mw.*
outputting the value of *frac(x)* as 'x', if x_pow<-1 and the input floating-point number *x* is positive; and
outputting the value of *frac(x)* as 1-1 ULP, if x_pow ≤-(*mw*+2) and the input floating-point number x is negative.

10. The method as claimed in claim 7, wherein the method comprises:
outputting the value of *frac(x)* as *x*, if the input floating-point number *x* is a positive denormal number; and
outputting the value of *frac(x)* as 1-1 ULP, if the input floating-point number *x* is a negative denormal number.

11. A hardware unit for outputting a value of *frac(x),* where *frac(x)* is defined as x *-floor(x),* wherein the hardware unit is configured to:
receive an input floating-point number x having a mantissa (m) of bit width *'mw',* an exponent (e) having a bit width *'ew',* and a sign bit (s);
output a value of *frac(x),* wherein:
the hardware unit is configured to output the value of *frac(x),* if 0.5 <= |*x*| < 2*^{mw}* , by applying a mask to the input floating-point number x to generate a masked result, and renormalizing the masked result; (case 2) and
the hardware unit is configured to output the value of *frac(x),* if-0.5 < *x <* -2^{-*mw*-2}, by negating the bits of the input floating-point number *x*, followed by steps of right shifting the negated number and rounding, and if the rounded value is 1, the output value of *frac(x)* is a value below 1, otherwise the output value of *frac(x)* is the rounded value.

12. The hardware unit as claimed in claim 11, the hardware unit is configured to:
determine a first candidate value by applying a mask to the input floating-point number x to generate a masked result, and renormalizing the masked result;
determine a second candidate value by negating the bits of the input floating-point number x, followed by steps of right shifting the negated number and rounding;
select, by the hardware unit, the first candidate value as the value of *frac(x),* if 0.5 <= |*x*| < 2*^{mw}* ; and
select, by the hardware unit, the second candidate value as the value of *frac(x),* if -0.5 < *x* < -2^{-*mw*-2}, wherein if the second candidate value is 1, then the second candidate value of is set to be a value below 1.

13. The hardware unit as claimed in claim 11, wherein the hardware unit is further configured to output the value of *frac(x)* as 0, if |*x*| >= 2*^{mw}* .

14. The hardware unit as claimed in claim 11, wherein the hardware unit is further configured to:
output the value of *frac(x)* as x, if 0 < *x* < 0.5 or if the input floating-point number *x* is a positive denormal number; and
output the value of *frac(x)* as 1-1ULP, if - 2^{-*mw*-2} ≤ *x* ≤ 0 or if the input floating-point number x is a negative denormal number.

15. A computer-implemented method of outputting a value of *frac(x),* where *frac(x)* is defined as x *-floor(x),* wherein the method comprises:
receiving an input floating-point number x having a mantissa (*m*) of bit width *'mw',* an exponent (*e*) having a bit width *'ew'* and a sign bit (*s*);
outputting a value of *frac(x),* wherein:
if 0.5 <= |*x*| < 2*^{mw}* , output the value of *frac(x)* by applying a mask to the input floating-point number *x* to generate a masked result, and renormalizing the masked result; (case 2) and
if -0.5 < *x* < -2^{-*mw*-2} output the value of *frac(x)* by negating the bits of the input floating-point number x, followed by steps of right shifting the negated number and rounding, wherein if the rounded value is 1, the output value of *frac(x)* is a value below 1, otherwise the output value of *frac(x)* is the rounded value.
